# EUROPEAN PATENT SPECIFICATION

(11) **EP 4 427 922 B1**
(45) Date of publication and mention of the grant of the patent: **31.12.2025**
(21) Application number: 24160948.6
(22) Date of filing: 01.03.2024
(51) Int. Cl.: B32B 5/02, B32B 5/12, B32B 27/10, B32B 29/00, B32B 29/02, B44C 5/04

(54) **A PANEL COMPRISING A STACK OF A PLURALITY OF CORE LAYERS EMBEDDED BETWEEN A DÉCOR LAYER AND A BACK SIDE LAYER**
PANEEL MIT EINEM STAPEL AUS MEHREREN ZWISCHEN EINER DEKORSCHICHT UND EINER RÜCKSEITENSCHICHT EINGEBETTETEN KERNSCHICHTEN
PANNEAU COMPRENANT UN EMPILEMENT D'UNE PLURALITÉ DE COUCHES CENTRALES INCORPORÉES ENTRE UNE COUCHE DÉCOR ET UNE COUCHE ARRIÈRE

(30) Priority: 06.03.2023 GR 20230100189; 16.03.2023 NL 2034354
(43) Date of publication of application: 11.09.2024
(73) Proprietor: Trespa International B.V., 6002 SM Weert (NL)
(72) Inventor: TOULIATOU, Dimitra, WEERT (NL)
(74) Representative: Algemeen Octrooi- en Merkenbureau B.V.

(56) References cited:
- US-A1- 2020 331 246
- US-B1- 8 187 702
- US-B1- 8 187 702

## Description

The present invention relates to a panel comprising a stack of a plurality of core layers embedded between a décor layer and a back side layer. In addition, the present application also relates to a method of manufacturing such a panel and to the use thereof.

Panels are known in the art. For example, US 4 789 604 relates to a decorative panel, comprising: a core layer; an outermost layer applied over said core layer, wherein said outermost layer comprises a synthetic resin polymer, which polymer is comprised of at least one unsaturated acrylate or unsaturated methacrylate group. Such a decorative panel is resistant to weathering, acids and solvents and has a high surface hardness and only a slight surface gloss.

European patent EP 3609948 in the name of the present applicant discloses a method for manufacturing a high pressure laminate comprising a step of preparing a stack of resin impregnated papers and a step of pressing the stack in a press using an elevated temperature and an elevated pressure, wherein in the step of preparing these resin impregnated papers a lignin-phenol formaldehyde resin is used that is prepared with lignin methylolation and phenol methylolation steps.

US 4 927 572 relates to a method for producing a decorative panel, comprising the steps of: providing an underlay; applying to said underlay a decorative layer; applying to said decorative layer a liquid coating consisting essentially of a radiation-polymerizable mixture; applying radiation to form a radiation-polymerized layer on said decorative layer; and thermopressing said underlay. Such a decorative panel is suitable for exterior walls, for interior decoration, and for the manufacture of specialized furniture.

EP 2 367 981 relates to a decorative panel comprising a decorative film, wherein the decorative film comprises a substrate, an intermediate layer, a decorative layer, and a protective layer, wherein the decorative layer is a layer formed by means of inkjet technology.

WO 2011/034608 relates to a cross-plied material formed of portions of a ply of a ballistic-resistant laminate structure composed of unidirectionally-oriented bundles of high strength filaments laminated between opposing thermoplastic films which portions are cross-plied with portions of a continuous ply of a similar ballistic-resistant laminate structure with a plurality of yarns laterally spaced into a linear array corresponding to the width of the continuous ply along the ply direction.

JP 2019/072859 relates to a laminated exterior material wherein the carbon fiber reinforced thermoplastic resin composition layer is a cross-ply laminated body of a unidirectional sheet.

EP 3 369 768 relates to an incised prepreg comprising, in at least a partial region in a prepreg that contains unidirectionally oriented reinforcing fibers and a resin, a plurality of incisions that divide reinforcing fibers.

EP 1 612 343 relates to a construction panel wherein the carrier layer of the timber construction panel consists of at least a first layer of individual elements which are laterally spaced apart from one another and arranged parallel to one another, and a second layer of crosswise to the first layer arranged, laterally spaced individual elements, wherein the spaces between the individual elements of at least one of the layers form the spaces for the sound absorption material.

CN1462676A relates to a bamboo profile for building structure formed by stacking a plurality of groups of bamboo sheets in the same direction, wherein several cross layers are sandwiched between each group of the bamboo sheet layers in the forward direction.

US 8,187,702 relates to a decorative laminate comprising a core comprising at least one epoxy resin impregnated fibreboard sheet having a thickness from about 2 mm to about 10 mm, wherein the epoxy resin impregnated fibreboard sheet comprises a sheet of fibreboard impregnated with epoxy resin, and at least one decorative layer provided adjacent to the core, wherein the decorative laminate defines a flexural strength in the range of from about 110 to about 130 MPa under ISO 178. The method of making such a decorative laminate comprises providing the core, placing the at least one decorative layer adjacent to the core, and applying heat and pressure to the decorative layer and core in an amount sufficient to cure and form a decorative laminate.

US 2020/331246 relates to a method of making a carpet composition comprising providing a primary backing material having a face surface and a back surface tufting a plurality of fibers through the primary backing material, such that a portion of the plurality of fibers extends from the face surface of the primary backing and wherein a second portion of the plurality of fibers are exposed on the back surface of the primary backing in a form of back stitches, and applying a composite cross-ply secondary backing material to be adhered to the back surface of the primary backing material. The composite cross-ply secondary backing material comprises a cross-ply layer having a face surface and a back surface, wherein the cross-ply layer comprises a plurality of cross-laid tapes in predefined orientation comprising a polymeric material selected from polyethylene, polypropylene, polyester, nylon, polylactic acid, acrylics, or any combination thereof.

Decorative panels are, for example, high pressure decorative laminates (HPL) and are composed of, for example, a stack of paper webs impregnated with resin and compressed under hot conditions, as the core layer, and of a top layer made of resin-impregnated decorative paper. These panels need to be resistant to weathering and highly dimensionally stable.

An object of the present invention is to optimize the material usage in high pressure laminates (HPL), so that less material is to be used for achieving the same performance, thus saving raw material costs, and reducing the CO₂ impact.

Another object of the present invention is to use a broad range of starting materials without sacrificing mechanical properties of the final panel.

Another object of the present invention is to provide a panel that will carry higher loads when compared to an existing panel having a similar thickness.

The present inventors conducted extensive research and as a result, the inventors found that one or more of the above objects can be achieved by a decorative panel comprising a stack of a plurality of paper sheets embedded between a décor layer and a back side layer, said stack of a plurality of paper sheets forming a core, wherein the core comprises a top region, a centre region and a bottom region, wherein the top region is adjacent to the décor layer, the bottom region is adjacent to the back side layer and the centre region is positioned between the top region and the bottom region,
wherein the sheets comprise a matrix of paper fibres and resin,
wherein at least two of the outermost sheets of the top region adjacent to the décor layer are sheets having a MD/CD >1.0 and wherein at least two of the outermost sheets of the bottom region adjacent to the back side layer are sheets having a MD/CD >1.0, wherein the at least two outermost sheets of the top region are arranged in alternatingly perpendicular direction and the at least two outermost sheets of the bottom region are arranged in alternatingly perpendicular direction, and wherein the sheet of the top region in direct contact with décor layer and the sheet of the bottom region in direct contact with the back side layer are positioned in the same direction, wherein MD/CD relates to paper fibre orientation, measured according to ISO 1924-2.

The present inventors found that one or more of the above objects are achieved by the present panel. The specific arrangement, i.e. an arrangement in alternatingly perpendicular direction, of the at least two outermost sheets of the top region and the at least two outermost sheets of the bottom region will result in a stiffer panel compared to a panel wherein no such arrangement is present. In other words, the sheet direction where most paper fibers are oriented in will have a stronger and stiffer performance. In the present invention the sheets are always stacked in a way that the stronger and stiffer direction is distributed to two perpendicular directions. The present cross-plied panels will comprise sheets where the stronger and stiffer performance of the sheets will be alternatingly placed in 0 and 90 degrees.

In this field of technology there is a standard way to define the MD/CD ratio. This can be measured according to ISO 1924-2. In the industrial papermaking process, fibres are oriented in machine direction (MD) due to hydrodynamic forces. Fibre orientation leads to different mechanical properties in machine direction and in cross direction (CD). The MD/CD ratio is in principle provided by the manufacturer of the sheets. The degree of fibre orientation can be qualified by the anisotropy of the sheet. An anisotropy can be defined as the ratio of some property in the two principal in-plane directions of sheet, the machine or manufacturing direction, MD, and the cross machine direction, CD.

In an example of a decorative panel at least two of the outermost sheets of the top region adjacent to the décor layer have a MD/CD >1.2, preferably a MD/CD >1.4. The present inventors found that the use of a sheet having a MD/CD >1.2, preferably a MD/CD >1.4 has resulted in improvements with regard to stiffness and strength properties of the final panel.

In an example of a decorative panel at least two of the outermost sheets of the bottom region adjacent to the back side layer have a MD/CD >1.2, preferably a MD/CD >1.4. The present inventors found that the use of a sheet having a MD/CD >1.2, preferably a MD/CD >1.4 has resulted in improvements with regard to stiffness and strength properties of the final panel.

In an example of a decorative panel at least two of the outermost sheets of the top region adjacent to the décor layer have a different MD/CD ratio. This means that the outermost sheets may have a different MD/CD ratio as long as both sheet have a ratio >1.0. For example, the sheet in direct contact with the décor layer has a MD/CD ratio of 1.2 and the sheet directly below that sheet has a MD/CD ratio of 1.1, or vice versa.

In an example of a decorative panel at least two of the outermost sheets of the bottom region adjacent to the back side layer have a different MD/CD ratio. This means that the outermost sheets may have a different MD/CD ratio as long as both sheet have a ratio >1.0. For example, the sheet in direct contact with the back side layer has a MD/CD ratio of 1.2 and the sheet directly below that sheet has a MD/CD ratio of 1.1, or vice versa.

In an example the plurality of remaining sheets forming the core is constructed in such a way that the position of the sheets in the stack is symmetric around the midplane of the stack.

In an example a sheet may comprise a number of similar sub-sheets, wherein each of the similar sub-sheet is arranged in the same direction. In an example wherein two outermost sheets of the top region are arranged in alternatingly perpendicular direction, i.e. a first outermost layer and a second outermost layer, the first outermost layer can consist of, for example, three similar sub-sheets, i.e. sheets having the same MD/CD range, and the second outermost layer can consist of, for example, three similar sub-sheets, i.e. sheets having the same MD/CD range. The number of sub-sheets is not restricted to a specific number. Thus two, three, four or even more sub-sheets may be present. In an example the top region, centre region and bottom region comprise a plurality of sheets.

In practice, the sheets are obtained from a roll and cut into the desired size. The MD/CD value of the total roll may vary within a certain range. Thus, in practice a sheet may have a MD/CD value of 1.42 and a sheet may have a MD/CD value of 1.43, where both sheets originate from the same roll. According to the present invention it is to be understood that both sheets are considered as sheets having the same MD/CD range.

In an example the fibres are chosen from the group of glass fibres, textile fibres, and cellulose based fibres, such as wood fibres, and prepregs, or a combination thereof. Prepregs are manufactured via a step of impregnation of wood fibres with a resin as discussed above and a step of pressing the wood fibres thus impregnated to form a prepreg.

In an example the resin is chosen from the group of thermoset resins, preferably based on resin from the group consisting of phenol resin, melamine resin, urea resin, polyisocyanate resin, melamine acrylate, polyurethane acrylate, and thermoplastic resins, such as polypropylene, polylactic acid and phenolic resins, or combinations thereof.

In an example the sheet is paper, especially a resin impregnated paper. The paper may comprise different types of fibres and combinations thereof, such as fibres chosen from the group of glass fibres, textile fibres, and cellulose based fibres, such as wood fibres, and prepregs. As a resin the resins mentioned below can be used.

In an example the sheet comprises a resin impregnated paper, chosen from the group of thermoset resins, preferably based on resin from the group consisting of phenol resin, melamine resin, urea resin, polyisocyanate resin, melamine acrylate, polyurethane acrylate, and thermoplastic resins, such as polypropylene, polylactic acid and phenolic resins, or combinations thereof.

In an example the plurality of sheets may further comprise resin impregnated glass fiber mats, non-impregnated papers, and polymer foils. These sheets may be present in each of the top region, core region and bottom region, wherein the at least two outermost sheets of the top region and the at least two outermost sheets of the bottom region are constructed as discussed above, i.e. the top and bottom region comprising sheets having a specific MD/CD ratio positioned in a specific direction.

In an example the décor layer comprises a substrate layer provided with a base coat layer, wherein the base coat layer is provided with a topcoat layer.

In an example at least a coating of the base coat layer and the topcoat comprises a coating layer chosen from the group of melamine and radiation-cured resins chosen from the group of electron beam radiation (EBC) curable resins, UV radiation curable resins and X-ray radiation curable resins, or a combination thereof.

In an example an intermediate coat layer is provided between the base coat layer and the topcoat layer
In an example at least one of the base coat layer, the top coat layer and the intermediate coat layer comprise a radiation-cured resin comprises at least an oligomer selected from the group consisting of a polycarbonate acrylate, a polycarbonate methacrylate, a polyether acrylate, a polyether methacrylate, an acrylic acrylate, an acrylic methacrylate, an epoxy-acrylate, an epoxy-methacrylate, a silicone-acrylate, a silicone-methacrylate, a polyester acrylate, a polyester methacrylate, a urethane acrylate, and a urethane methacrylate, especially an electron beam radiation (EBC) or UV radiation curable resins curable oligomer.

In an example the substrate layer is a non-pigmented or pigmented substrate layer chosen from the group of resin impregnated paper, non-impregnated paper, and polymeric foil.

The present invention also relates to a method of manufacturing a panel as discussed above, the method comprising the following steps:
a) providing paper sheets having a MD/CD >1.0, said sheets comprising a matrix of fibres and resin, wherein MD/CD relates to paper fibre orientation, measured according to ISO1924-2,
b) providing a décor layer,
c) providing a back side layer,
d) positioning the paper sheets of a), the décor layer of b) and the back side layer of c) in such a way that a stack of a plurality of paper sheets is embedded between the décor layer of b) and the back side layer of c), said stack of a plurality of paper sheets forming a core, wherein the core comprises a top region, a centre region and a bottom region, wherein the top region is adjacent to the décor layer, the bottom region is adjacent to the back side layer and the centre region is positioned between the top region and the bottom region
   wherein at least two of the outermost sheets of the top region adjacent to the décor layer are sheets having a MD/CD >1.0 and wherein at least two of the outermost sheets of the bottom region adjacent to the back side layer are sheets having a MD/CD >1.0, wherein the at least two outermost sheets of the top region are arranged in alternatingly perpendicular direction and the at least two outermost sheets of the bottom region are arranged in alternatingly perpendicular direction, and wherein the sheet of the top region in direct contact with décor layer and the sheet of the bottom region in direct contact with the back side layer are positioned in the same direction.
e) pressing the construction of d) under conditions of elevated temperature and pressure for obtaining the panel. In an example the plurality of sheets forming the core is constructed in such a way that the position of the sheets in the stack is symmetric around the midplane of the stack.

Decorative high-pressure compact laminates have been disclosed in, inter alia, US Patent No. 4,801,495, US Patent No. 4,789,604, and US publication number 2013/0078437. In the manufacture of HPL panels, the package, comprising the core layer and surface layer or layers, and the paper layers possibly located between them as well, is thermopressed to make a decorative panel; the thermosetting resins are cured in this process. The temperature is in the range from 120 DEG to 210 DEG C., the pressure is in the range from 10 to 100 bar, and the reaction time is from 1 to 75 minutes.

CPL ("Continuous Pressure Laminates" or alternatively "Continuous Pressed Laminates") lines can be operated with a pressure in the range of 20 - 50 bar and temperatures between at least 120°C, preferably at least 150°C and at most 190°C, preferably at most 170°C, but CPL lines are also capable of achieving pressures in the range of 70 - 80 bar. The conveyor speed may be in a range of 5 to 20 m/min.

In a typical CPL line the impregnated papers are continually fed into the press from multiple feeds together with a decorative paper. During the CPL process they are then compressed and heated to form a laminate product. Laminate properties are similar to standard HPL, and a typical thickness range is between 0.4 mm to 1,2 mm. During the step of bonding together the individual components, i.e. the impregnated papers, and the decorative paper, with simultaneous application of heat, for example ≥ 120° C, and high specific pressure (> 70 bars) a homogeneous non-porous laminate with increased density and integral decorative surface is obtained.

The present invention also relates to the use of a panel as discussed above or a panel obtained according to the method as discussed above wherein the decorative panel is a component of at least one of furniture, a benchtop, a seat, a tabletop, a laboratory table, a countertop, a nightstand, a picnic table, a gaming table, a hot plate, a floor element, an interior wall, an exterior wall, a ceiling, a fence element, a balcony element, and a facade. Other uses are for example desktops, cabinet doors, cabinet boxes, shelving, wall panels, worksurfaces, such as kitchen countertops, tables, exhibit panels, office dividers, bathroom dividers, laminate flooring, and other areas.

Reference will now be made to the examples, which depict one or more embodiments described in this disclosure. However, it will be understood that other examples not depicted in the section hereafter fall within the scope and spirit of this disclosure.

### Example

**Table: effect of cross-plying on mechanical properties of several types of panels**

| E modulus (MPa) | | | Flexural strength (Mpa) | | | Tensile strength (Mpa) | | |
|---|---|---|---|---|---|---|---|---|
| MD/CD ≈ 1 | MD/CD > 1 | MD/CD >> 1 | MD/CD ≈ 1 | MD/CD > 1 | MD/CD >> 1 | MD/CD ≈ 1 | MD/CD > 1 | **MD/CD** >> 1 |
| 0 | + | +++ | 0 | 0 | ++ | 0 | + | +++ |
| 0 | not tested | ++ | 0 | not tested | ++ | 0 | not tested | ++ |
| 0 | not tested | + | 0 | not tested | + | 0 | not tested | + |
| 0 | not tested | ++ | 0 | not tested | ++ | 0 | not tested | +++ |

In this Table refers +++= particularly good, ++=good, +=acceptable, and 0=reference. Some panels have not been tested. The reference value in the above Table relates to a panel made of sheets having a MD/CD of about 1, i.e. the orientation of the fibers in the MD direction is about the same as in the CD direction.

In this example four different panels (Panel#1-Panel#4) were manufactured and evaluated for stiffness (E modulus (MPa)) and strength (Flexural strength (MPa) and Tensile strength (MPa)).

Panel#1 is a fully cross-plied panel with alternating sheet orientation, Panel#2 is a 50 % cross-plied panel with alternating sheet orientation, Panel#3 is a panel where only two sheets close to the surface are cross-plied, and Panel#4 is a fully cross-plied panel where the alternating sheets comprise of total of three sub-layers.

From the table it is clear that both stiffness and strength properties are improved when the MD/CD is increased from MD/CD ≈ 1 to MD/CD > 1. A further improvement for both stiffness and strength properties is observed for MD/CD >> 1.

From the table one can deduce that the E modulus of Panel#1 will exhibit a greater improvement than the E modulus of Panel#2. Panel #1 has the highest score for both stiffness and strength properties compared to Panel#2, Panel#3, and Panel#4.

Each of the panels #1-#4 consisted of a stack of sheets of phenol resin impregnated paper embedded between a décor layer and a back side layer. The décor layer of all panels consisted of a paper substrate layer provided with a base coat layer, wherein the base coat layer is provided with a topcoat layer.

## Claims

1. A decorative panel comprising a stack of a plurality of paper sheets embedded between a décor layer and a back side layer, said stack of a plurality of paper sheets forming a core, wherein the core comprises a top region, a centre region and a bottom region, wherein the top region is adjacent to the décor layer, the bottom region is adjacent to the back side layer and the centre region is positioned between the top region and the bottom region, **characterized in that** the sheets comprise a matrix of paper fibres and resin,
wherein at least two of the outermost sheets of the top region adjacent to the décor layer are sheets having a MD/CD >1.0 and wherein at least two of the outermost sheets of the bottom region adjacent to the back side layer are sheets having a MD/CD > 1.0, wherein the at least two outermost sheets of the top region are arranged in alternatingly perpendicular direction and the at least two outermost sheets of the bottom region are arranged in alternatingly perpendicular direction, and wherein the sheet of the top region in direct contact with décor layer and the sheet of the bottom region in direct contact with the back side layer are positioned in the same direction, wherein MD/CD relates to paper fibre orientation, measured according to ISO 1924-2.

2. A decorative panel according to claim 1, wherein at least two of the outermost sheets of the top region adjacent to the décor layer have a MD/CD >1.2, preferably a MD/CD > 1.4.

3. A decorative panel according to any one of claims 1-2, wherein at least two of the outermost sheets of the bottom region adjacent to the back side layer have a MD/CD >1.2, preferably a MD/CD >1.4.

4. A decorative panel according to any one of claims 1-3, wherein at least two of the outermost sheets of the top region adjacent to the décor layer have a different MD/CD ratio.

5. A decorative panel according to any one of claims 1-4, wherein at least two of the outermost sheets of the bottom region adjacent to the back side layer have a different MD/CD ratio.

6. A decorative panel according to any one of the preceding claims, wherein the plurality of remaining sheets forming the core is constructed in such a way that the position of the sheets in the stack is symmetric around the midplane of the stack.

7. A decorative panel according to any one of the preceding claims, wherein a sheet comprises a number of similar sub-sheets, wherein each of the similar sub-layers is arranged in the same direction.

8. A decorative panel according to any one of the preceding claims, wherein the paper fibres are chosen from the group of textile fibres, and cellulose based fibres, such as wood fibres, or a combination thereof.

9. A decorative panel according to any one of the preceding claims, wherein the resin is chosen from the group of thermoset resins, preferably based on resin from the group consisting of phenol resin, melamine resin, urea resin, polyisocyanate resin, melamine acrylate, polyurethane acrylate, and thermoplastic resins, such as polypropylene, polylactic acid and phenolic resins, or combinations thereof.

10. A decorative panel according to any one of the preceding claims, wherein the sheet comprises a resin impregnated paper, chosen from the group of thermoset resins, preferably based on resin from the group consisting of phenol resin, melamine resin, urea resin, polyisocyanate resin, melamine acrylate, polyurethane acrylate, and thermoplastic resins, such as polypropylene, polylactic acid and phenolic resins, or combinations thereof.

11. A decorative panel according to any one of the preceding claims, wherein the core further comprises one or more sheets chosen from the group of resin impregnated glass fiber mats, non-impregnated papers and polymer foils, or a combination thereof.

12. A decorative panel according to any one of the preceding claims, wherein the décor layer comprises a substrate layer provided with a base coat layer, wherein the base coat layer is provided with a topcoat layer, especially wherein at least a coating of the base coat layer and the topcoat comprises a coating layer chosen from the group of melamine and radiation-cured resins chosen from the group of electron beam radiation (EBC) curable resins, UV radiation curable resins and X-ray radiation curable resins, or a combination thereof, wherein preferably between the base coat layer and the topcoat layer an intermediate coat layer is provided, wherein the substrate layer is a non-pigmented or pigmented substrate layer chosen from the group of resin impregnated paper, non-impregnated paper, and polymeric foil.

13. A decorative panel according to claim 12, wherein at least one of the base coat layer, the top coat layer and the intermediate coat layer comprise a radiation-cured resin comprises at least an oligomer selected from the group consisting of a polycarbonate acrylate, a polycarbonate methacrylate, a polyether acrylate, a polyether methacrylate, an acrylic acrylate, an acrylic methacrylate, an epoxy-acrylate, an epoxy-methacrylate, a silicone-acrylate, a silicone-methacrylate, a polyester acrylate, a polyester methacrylate, a urethane acrylate, and a urethane methacrylate, especially an electron beam radiation (EBC) or UV radiation curable resins curable oligomer.

14. A method of manufacturing a decorative panel according to any one of the preceding claims, comprising the following steps:
a) providing paper sheets having a MD/CD >1.0, said sheets comprising a matrix of fibres and resin, wherein MD/CD relates to paper fibre orientation, measured according to ISO 1924-2,
b) providing a décor layer,
c) providing a back side layer,
d) positioning the paper sheets of a), the décor layer of b) and the back side layer of c) in such a way that a stack of a plurality of paper sheets is embedded between the décor layer of b) and the back side layer of c), said stack of a plurality of paper sheets forming a core, wherein the core comprises a top region, a centre region and a bottom region, wherein the top region is adjacent to the décor layer, the bottom region is adjacent to the back side layer and the centre region is positioned between the top region and the bottom region
wherein at least two of the outermost sheets of the top region adjacent to the décor layer are sheets having a MD/CD >1.0 and wherein at least two of the outermost sheets of the bottom region adjacent to the back side layer are sheets having a MD/CD >1.0, wherein the at least two outermost sheets of the top region are arranged in alternatingly perpendicular direction and the at least two outermost sheets of the bottom region are arranged in alternatingly perpendicular direction, and wherein the sheet of the top region in direct contact with décor layer and the sheet of the bottom region in direct contact with the back side layer are positioned in the same direction.
e) pressing the construction of d) under conditions of elevated temperature and pressure for obtaining the panel.

15. The use of a decorative panel according to any one or more of the claims 1-13 or a panel obtained according to the method of claim 14 in wherein the decorative panel is a component of at least one of furniture, a tabletop, a laboratory table, a countertop, a nightstand, a picnic table, a hot plate, an interior wall, and exterior wall, a ceiling, and a facade.

## Patentansprüche

1. Dekorpaneel, das einen Stapel aus mehreren Papierlagen umfasst, die zwischen einer Dekorschicht und einer Rückseitenschicht eingebettet sind, wobei der Stapel aus mehreren Papierlagen einen Kern bildet, wobei der Kern einen oberen Bereich, einen mittleren Bereich und einen unteren Bereich umfasst, wobei der obere Bereich an die Dekorschicht angrenzt, der untere Bereich an die Rückseitenschicht angrenzt und der mittlere Bereich zwischen dem oberen Bereich und dem unteren Bereich platziert ist, **dadurch gekennzeichnet, dass** die Lagen eine Matrix aus Papierfasern und Harz umfassen,
wobei mindestens zwei der äußersten Lagen des oberen Bereichs angrenzend an die Dekorschicht Lagen sind, die ein MD/CD > 1,0 aufweisen, und wobei mindestens zwei der äußersten Lagen des unteren Bereichs angrenzend an die Rückseitenschicht Lagen sind, die ein MD/CD > 1,0 aufweisen, wobei die mindestens zwei äußersten Lagen des oberen Bereichs in abwechselnd senkrechter Richtung angeordnet sind und die mindestens zwei äußersten Lagen des unteren Bereichs in abwechselnd senkrechter Richtung angeordnet sind, und wobei die Lage des oberen Bereichs in direktem Kontakt mit der Dekorschicht und die Lage des unteren Bereichs in direktem Kontakt mit der Rückseitenschicht in derselben Richtung platziert sind, wobei sich MD/CD auf die Papierfaserausrichtung bezieht, gemessen nach ISO 1924-2.

2. Dekorpaneel nach Anspruch 1, wobei mindestens zwei der äußersten Lagen des oberen Bereichs angrenzend an die Dekorschicht einen MD/CD > 1,2, vorzugsweise einen MD/CD > 1,4 aufweisen.

3. Dekorpaneel nach einem der Ansprüche 1-2, wobei mindestens zwei der äußersten Lagen des unteren Bereichs angrenzend an die Rückseitenschicht einen MD/CD > 1,2, vorzugsweise einen MD/CD > 1,4 aufweisen.

4. Dekorpaneel nach einem der Ansprüche 1-3, wobei mindestens zwei der äußersten Lagen des oberen Bereichs angrenzend an die Dekorschicht ein unterschiedliches MD/CD-Verhältnis aufweisen.

5. Dekorpaneel nach einem der Ansprüche 1-4, wobei mindestens zwei der äußersten Lagen des unteren Bereichs angrenzend an die Rückseitenschicht ein unterschiedliches MD/CD-Verhältnis aufweisen.

6. Dekorpaneel nach einem der vorhergehenden Ansprüche, wobei die mehreren verbleibenden Lagen, die den Kern bilden, derart aufgebaut sind, dass die Position der Lagen in dem Stapel um die Mittelebene des Stapels herum symmetrisch ist.

7. Dekorpaneel nach einem der vorhergehenden Ansprüche, wobei eine Lage mehrere ähnliche Teillagen umfasst, wobei jede der ähnlichen Teilschichten in derselben Richtung angeordnet ist.

8. Dekorpaneel nach einem der vorhergehenden Ansprüche, wobei die Papierfasern aus der Gruppe aus textilen Fasern und zellulosebasierten Fasern, beispielsweise Holzfasern, oder einer Kombination daraus ausgewählt sind.

9. Dekorpaneel nach einem der vorhergehenden Ansprüche, wobei das Harz aus der Gruppe aus duroplastischen Harzen, vorzugsweise auf Grundlage von Harz aus der Gruppe bestehend aus Phenolharz, Melaminharz, Harnstoffharz, Polyisocyanatharz, Melamin-Acrylat, Polyurethan-Acrylat, sowie thermoplastischen Harzen, beispielsweise Polypropylen, Polymilchsäure und Phenolharzen, oder Kombinationen daraus ausgewählt ist.

10. Dekorpaneel nach einem der vorhergehenden Ansprüche, wobei die Lage ein harzimprägniertes Papier umfasst, das aus der Gruppe aus duroplastischen Harzen, vorzugsweise auf Grundlage von Harz aus der Gruppe bestehend aus Phenolharz, Melaminharz, Harnstoffharz, Polyisocyanatharz, Melamin-Acrylat, Polyurethan-Acrylat, sowie thermoplastischen Harzen, beispielsweise Polypropylen, Polymilchsäure und Phenolharzen, oder Kombinationen daraus ausgewählt ist.

11. Dekorpaneel nach einem der vorhergehenden Ansprüche, wobei der Kern ferner eine oder mehrere Lagen umfasst, die aus der Gruppe aus harzimprägnierten Glasfasermatten, nicht imprägniertem Papier und Polymerfolien oder einer Kombination daraus ausgewählt ist.

12. Dekorpaneel nach einem der vorhergehenden Ansprüche, wobei die Dekorschicht eine Substratschicht umfasst, die mit einer Basisschicht versehen ist, wobei die Basisschicht mit einer Deckschicht versehen ist, wobei insbesondere mindestens eine Schicht aus der Basisschicht und der Deckschicht eine Beschichtungslage umfasst, die aus der Gruppe aus Melaminharzen und strahlungsgehärteten Harzen ausgewählt ist, die aus der Gruppe von mittels Elektronenstrahlung härtenden Harzen, mittels UV-Strahlung härtenden Harzen und mittels Röntgenstrahlung härtenden Harzen oder einer Kombination daraus ausgewählt sind, wobei zwischen der Basisschicht und der Deckschicht vorzugsweise eine Zwischenlage vorgesehen ist, wobei
die Substratschicht eine nicht pigmentierte oder pigmentierte Substratschicht ist, die aus der Gruppe aus harzimprägniertem Papier, nicht imprägniertem Papier und Polymerfolie ausgewählt ist.

13. Dekorpaneel nach Anspruch 12, wobei mindestens eine die Basisschicht, die Deckschicht und/oder die Zwischenlage ein strahlungsgehärtetes Harz umfassen, das mindestens ein Oligomer umfasst, das aus der Gruppe bestehend aus einem Polycarbonat-Acrylat, einem Polycarbonat-Methacrylat, einem Polyether-Acrylat, einem Polyether-Methacrylat, einem Acryl-Acrylat, einem Acryl-Methacrylat, einem Epoxid-Acrylat, einem Epoxid-Methacrylat, einem Silikon-Acrylat, einem Silikon-Methacrylat, einem Polyester-Acrylat, einem Polyester-Methacrylat, einem Urethan-Acrylat und einem Urethan-Methacrylat, insbesondere mittels Elektronenstrahlung härtenden oder mittels UV-Strahlung härtenden Harzen härtendem Oligomer ausgewählt ist.

14. Verfahren zur Herstellung eines Dekorpaneels nach einem der vorhergehenden Ansprüche, das folgende Schritte umfasst:
a) Bereitstellen von Papierlagen mit einem MD/CD > 1,0, wobei die Lagen eine Matrix aus Fasern und Harz umfassen, wobei sich MD/CD auf die Papierfaserausrichtung bezieht, gemessen nach ISO 1924-2,
b) Bereitstellen einer Dekorschicht,
c) Bereitstellen einer Rückseitenschicht,
d) Platzieren der
Papierlagen aus a), der Dekorschicht aus b) und der Rückseitenschicht aus c) derart, dass ein Stapel aus mehreren Papierlagen zwischen der Dekorschicht aus b) und der Rückseitenschicht aus c) eingebettet sind, wobei der Stapel aus mehreren Papierlagen einen Kern bildet, wobei der Kern einen oberen Bereich, einen mittleren Bereich und einen unteren Bereich umfasst, wobei der obere Bereich an die Dekorschicht angrenzt, der untere Bereich an die Rückseitenschicht angrenzt und der mittlere Bereich zwischen dem oberen Bereich und dem unteren Bereich platziert ist, wobei mindestens zwei der äußersten Lagen des oberen Bereichs angrenzend an die Dekorschicht Lagen sind, die ein MD/CD > 1,0 aufweisen, und wobei mindestens zwei der äußersten Lagen des unteren Bereichs angrenzend an die Rückseitenschicht Lagen sind, die ein MD/CD > 1,0 aufweisen, wobei die mindestens zwei äußersten Lagen des oberen Bereichs in abwechselnd senkrechter Richtung angeordnet sind und die mindestens zwei äußersten Lagen des unteren Bereichs in abwechselnd senkrechter Richtung angeordnet sind, und wobei die Lage des oberen Bereichs in direktem Kontakt mit der Dekorschicht und die Lage des unteren Bereichs in direktem Kontakt mit der Rückseitenschicht in derselben Richtung platziert sind,
e) Pressen der Konstruktion aus d) unter Bedingungen aus hoher Temperatur und Druck zum Erhalten des Paneels.

15. Verwendung eines Dekorpaneels nach einem oder mehreren der Ansprüche 1-13 oder eines Paneels, das nach dem Verfahren von Anspruch 14 erhalten wird, wobei das Dekorpaneel ein Bestandteil eines Möbelstücks, einer Tischplatte, eines Labortischs, einer Arbeitsplatte, eines Nachttischs, eines Picknicktischs, einer Kochplatte, einer Innenwand und Außenwand, einer Decke und/oder einer Fassade ist.

## Revendications

1. Panneau décoratif comprenant un empilement d'une pluralité de feuilles de papier incorporées entre une couche décor et une couche arrière, ledit empilement d'une pluralité de feuilles de papier formant un noyau, dans lequel le noyau comprend une région supérieure, une région centrale et une région inférieure, dans lequel la région supérieure est adjacente à la couche décor, la région inférieure est adjacente à la couche arrière et la région centrale est positionnée entre la région supérieure et la région inférieure, **caractérisé en ce que** les feuilles comprennent une matrice de fibres de papier et de résine,
dans lequel au moins deux des feuilles les plus externes de la région supérieure adjacente à la couche décor sont des feuilles ayant un rapport MD/CD > 1,0 et dans lequel au moins deux des feuilles les plus externes de la région inférieure adjacente à la couche arrière sont des feuilles ayant un rapport MD/CD > 1,0, dans lequel les au moins deux feuilles les plus externes de la région supérieure sont agencées dans une direction perpendiculaire en alternance et les au moins deux feuilles les plus externes de la région inférieure sont agencées dans une direction perpendiculaire en alternance, et dans lequel la feuille de la région supérieure en contact direct avec la couche décor et la feuille de la région inférieure en contact direct avec la couche arrière sont positionnées dans la même direction, dans lequel le rapport MD/CD se rapporte à l'orientation de fibres de papier, mesurée selon la norme ISO 1924-2.

2. Panneau décoratif selon la revendication 1, dans lequel au moins deux des feuilles les plus externes de la région supérieure adjacente à la couche décor ont un rapport MD/CD > 1,2, de préférence un rapport MD/CD > 1,4.

3. Panneau décoratif selon l'une quelconque des revendications 1 et 2, dans lequel au moins deux des feuilles les plus externes de la région inférieure adjacente à la couche arrière ont un rapport MD/CD > 1,2, de préférence un rapport MD/CD > 1,4.

4. Panneau décoratif selon l'une quelconque des revendications 1 à 3, dans lequel au moins deux des feuilles les plus externes de la région supérieure adjacente à la couche décor ont un rapport MD/CD différent.

5. Panneau décoratif selon l'une quelconque des revendications 1 à 4, dans lequel au moins deux des feuilles les plus externes de la région inférieure adjacente à la couche arrière ont un rapport MD/CD différent.

6. Panneau décoratif selon l'une quelconque des revendications précédentes, dans lequel la pluralité de feuilles restantes formant le noyau est construite de manière à ce que la position des feuilles dans l'empilement soit symétrique par rapport au plan médian de l'empilement.

7. Panneau décoratif selon l'une quelconque des revendications précédentes, dans lequel une feuille comprend un certain nombre de sous-feuilles similaires, dans lequel chacune des sous-feuilles similaires est agencée dans la même direction.

8. Panneau décoratif selon l'une quelconque des revendications précédentes, dans lequel les fibres de papier sont choisies parmi le groupe des fibres textiles et des fibres à base de cellulose, telles que les fibres de bois, ou une combinaison de celles-ci.

9. Panneau décoratif selon l'une quelconque des revendications précédentes, dans lequel la résine est choisie parmi le groupe des résines thermodurcissables, de préférence à base d'une résine du groupe constitué par la résine phénolique, la résine mélamine, la résine urée, la résine polyisocyanate, l'acrylate de mélamine, l'acrylate de polyuréthane et les résines thermoplastiques, telles que les résines de polypropylène, d'acide polylactique et phénolique, ou des combinaisons de celles-ci.

10. Panneau décoratif selon l'une quelconque des revendications précédentes, dans lequel la feuille comprend un papier imprégné de résine, choisie parmi le groupe des résines thermodurcissables, de préférence à base d'une résine du groupe constitué par la résine phénolique, la résine mélamine, la résine urée, la résine polyisocyanate, l'acrylate de mélamine, l'acrylate de polyuréthane et des résines thermoplastiques, telles que les résines de polypropylène, d'acide polylactique et phénolique, ou des combinaisons de celles-ci.

11. Panneau décoratif selon l'une quelconque des revendications précédentes, dans lequel le noyau comprend en outre une ou plusieurs feuilles choisies dans le groupe des mats de fibres de verre imprégnés de résine, des papiers non imprégnés et des feuilles de polymère, ou une combinaison de ceux-ci.

12. Panneau décoratif selon l'une quelconque des revendications précédentes, dans lequel la couche décor comprend une couche de substrat pourvue d'une couche de revêtement de base, dans lequel la couche de revêtement de base est pourvue d'une couche de finition, en particulier dans lequel au moins un revêtement de la couche de revêtement de base et de la couche de finition comprend une couche de revêtement choisie parmi le groupe des résines mélamine et des résines durcies par rayonnement choisies parmi le groupe des résines durcissables par rayonnement de faisceau électronique (EBC), des résines durcissables par rayonnement UV et des résines durcissables par rayonnement X, ou une combinaison de celles-ci, dans lequel de préférence, entre la couche de revêtement de base et la couche de finition, une couche de revêtement intermédiaire est prévue, dans lequel la couche de substrat est une couche de substrat non pigmentée ou pigmentée choisie dans le groupe constitué par un papier imprégné de résine, un papier non imprégné et une feuille polymère.

13. Panneau décoratif selon la revendication 12, dans lequel au moins l'une de la couche de revêtement de base, de la couche de finition et de la couche de revêtement intermédiaire comprend une résine durcie par rayonnement comprenant au moins un oligomère choisi dans le groupe constitué par un polycarbonate acrylate, un polycarbonate méthacrylate, un polyéther acrylate, un polyéther méthacrylate, un acrylate acrylique, un méthacrylate acrylique, un époxy-acrylate, un époxy-méthacrylate, un silicone-acrylate, un silicone-méthacrylate, un polyester acrylate, un polyester méthacrylate, un uréthane acrylate et un uréthane méthacrylate, en particulier un oligomère durcissable de résines durcissables par rayonnement de faisceau électronique (EBC) ou par rayonnement UV.

14. Procédé de fabrication d'un panneau décoratif selon l'une quelconque des revendications précédentes, comprenant les étapes suivantes :
a) la fourniture de feuilles de papier ayant un rapport MD/CD > 1,0, lesdites feuilles comprenant une matrice de fibres et de résine, où le rapport MD/CD se rapporte à l'orientation de fibres de papier, mesurée selon la norme ISO 1924-2,
b) la fourniture d'une couche décor,
c) la fourniture d'une couche arrière,
d) le positionnement des feuilles de papier de a), de la couche décor de b) et de la couche arrière de c) de manière à ce qu'un empilement d'une pluralité de feuilles de papier soit incorporé entre la couche décor de b) et la couche arrière de c), ledit empilement d'une pluralité de feuilles de papier formant un noyau, dans lequel le noyau comprend une région supérieure, une région centrale et une région inférieure, dans lequel la région supérieure est adjacente à la couche décor, la région inférieure est adjacente à la couche arrière et la région centrale est positionnée entre la région supérieure et la région inférieure
dans lequel au moins deux des feuilles les plus externes de la région supérieure adjacente à la couche décor sont des feuilles ayant un rapport MD/CD > 1,0 et dans lequel au moins deux des feuilles les plus externes de la région inférieure adjacente à la couche arrière sont des feuilles ayant un rapport MD/CD > 1,0, dans lequel les au moins deux feuilles les plus externes de la région supérieure sont agencées dans une direction perpendiculaire en alternance et les au moins deux feuilles les plus externes de la région inférieure sont agencées dans une direction perpendiculaire en alternance, et dans lequel la feuille de la région supérieure en contact direct avec la couche décor et la feuille de la région inférieure en contact direct avec la couche arrière sont positionnées dans la même direction,
e) le pressage de la construction de d) dans des conditions de température et de pression élevées pour obtenir le panneau.

15. Utilisation d'un panneau décoratif selon l'une quelconque ou plusieurs des revendications 1 à 13 ou d'un panneau obtenu selon le procédé de la revendication 14, dans laquelle le panneau décoratif est un composant d'au moins l'un d'un meuble, d'un plateau de table, d'une table de laboratoire, d'un plan de travail de cuisine, d'une table de nuit, d'une table de pique-nique, d'une plaque chauffante, d'un mur intérieur et d'un mur extérieur, d'un plafond et d'une façade.
